# EUROPEAN PATENT SPECIFICATION

(11) **EP 2 842 922 B1**
(45) Date of publication and mention of the grant of the patent: **15.11.2017**
(21) Application number: 13004311.0
(22) Date of filing: 03.09.2013
(51) Int. Cl.: C04B 28/06, C04B 7/32

(54) **Fluxes/Mineralizers for calcium sulfoaluminate cements**
Flussmittel/Mineralisierungsmittel für Calciumsulfoaluminatzemente
Minéralisateurs/flux pour ciments de sulfoaluminate de calcium

(43) Date of publication of application: 04.03.2015
(73) Proprietor: HeidelbergCement AG, 69120 Heidelberg (DE)
(72) Inventor: Bullerjahn, Frank, 69181 Leimen (DE); Schmitt, Dirk, 69181 Leimen (DE); Spencer, Nicolas, 69254 Malch (DE); Ben Haha, Mohsen, 69117 Heidelberg (DE); Tebbe, Michael, 59590 Geseke (DE)
(74) Representative: Zellentin & Partner mbB Patentanwälte

(56) References cited:
- WO-A1-2010/086555
- CN-C- 100 396 635
- FR-A1- 2 949 112
- JP-A- H07 247 143
- SUHUA MA ET AL: "Effect of CuO on the formation mechanism of calcium sulphoaluminate", JOURNAL OF WUHAN UNIVERSITY OF TECHNOLOGY-MATER. SCI. ED., vol. 23, no. 4, 1 August 2008 (2008-08-01) , pages 518-521, XP055107506, ISSN: 1000-2413, DOI: 10.1007/s11595-006-4518-8
- DENG ET AL.: "Formation chemistry and performance of CuO doped alite-sulphoaluminate clinker", JOURNAL OF NANJING UNIVERSITY OF TECHNOLOGY, 5 May 2010 (2010-05-05), pages 28-31, XP002721689,
- LIN CHEN ET AL: "Effect of barium oxide on the formation and coexistence of tricalcium silicate and calcium sulphoaluminate", JOURNAL OF WUHAN UNIVERSITY OF TECHNOLOGY-MATER. SCI. ED., vol. 24, no. 3, 1 June 2009 (2009-06-01), pages 457-461, XP055107509, ISSN: 1000-2413, DOI: 10.1007/s11595-009-3457-6

## Description

The present invention relates to a method for production of calcium sulfoaluminate based clinker and cement types (CSA). The invention further relates to calcium sulfoaluminate based cements produced from the clinker and binders comprising the cement.

To simplify the description below, the following abbreviations, which are common in the cement industry, will be used: H - H₂O, C - CaO, A - Al₂O₃, F - Fe₂O₃, M - MgO, S - SiO₂ and $ - SO₃. Additionally, compounds are generally indicated in the pure forms thereof, without explicitly stating series of solid solutions/substitution by foreign ions and the like, as are customary in technical and industrial materials. As any person skilled in the art will understand, the composition of the phases mentioned by name in the present invention may vary, depending on the chemistry of the raw meal and the type of production, due to the substitution with various foreign ions, such compounds likewise being covered by the scope of the present invention.

Within the context of the present invention, clinker shall mean a sinter product which is obtained by burning a raw material mixture at an elevated temperature and which contains at least the hydraulically reactive phase ye'elimite (Ca₄(AlO₂)₆SO₄ or C₄A₃$ in cement chemist's notation). Cement denotes a clinker that is ground with or without adding further components. Binder or binder mixture denotes a mixture hardening hydraulically and comprising cement and typically, but not necessarily, additional finely ground components, and which is used after adding water, optionally admixtures and aggregate. A clinker may already contain all the necessary or desired phases and be used directly as a binder after being ground to cement.

The cement industry is known to consume a large quantity of raw materials and energy. In order to reduce the environmental impact industrial wastes have been promoted as raw materials and fuels to replace the naturally available raw materials for manufacturing. From the prior art it is further known to use fluxes and mineralizers for producing Portland cement clinker. Fluxes and mineralisers are defined as materials that promote the formation of melt and of intended clinker phases, respectively, already at lower burning temperatures during sintering, thereby allowing a reduction of sinter temperature or an increased conversion at the same temperature. The differentiation between fluxes and mineralisers is typically not applied strictly, as many materials show both effects. GB 1 498 057 is an example for a method of manufacturing clinker using fluxes/mineralizers. According to this method fluorine and sulphur are added during the raw mix preparation, usually in the form of fluorite (CaF₂) and gypsum (CaSO₄ ● 2H₂O).

Calcium fluoride is a typical flux used in the cement industry for reducing the temperature at which Portland cement (OPC) clinker is burnt. Cement manufacturers usually add calcium fluoride during the preparation of the raw mix to produce white cements, to optimize the production of grey cements and to reduce CO₂ emissions.

Calcium sulfate is another flux/mineralizer that has gained practical importance for OPC. As is well known, the cement industry also uses calcium sulfate (natural gypsum, chemical gypsum and anhydrite) as a setting regulator (typical addition rate is 3-5 %) adding it upon clinker grinding.

The development of alternative cements has been another focus besides optimizing the manufacturing of Portland cement. Over the past 35 years or so, energy saving or "low-energy" cement have been studied. To this end, calcium sulfoaluminate and belite cements were investigated.

Calcium sulfoaluminate cements or clinkers contain mainly polymorphs of ye'elimite. Depending on the raw materials used and the applied burning temperature they typically also contain belite, ferrites and/or aluminates, anhydrite and may further contain ternesite, see e.g. WO 2013/023728 A2. Manufacturing of the calcium sulfoaluminate cements is known. Typically raw materials are mixed in appropriate amounts, ground and burnt in a kiln to give a clinker. Usually, the clinker is then ground together with sulfate and optionally some or all of the other components to give the cement. A separate grinding is also possible and may be advantageous when the grindability of the components is largely different. The sulfate can be gypsum, bassanite, anhydrite, ternesite or mixtures thereof whereby anhydrite is commonly used. CSA cements are produced at lower temperatures than Portland cement and require less energy for grinding. Furthermore, they require less limestone in the raw mix than Portland cement, so there are less CO₂ emissions.

The use of industrial side products (e.g. slag, embers) as substitute raw-materials for calcium sulfoaluminate cement is already known from the prior art, too.

One important aspect is the correlation between the optimum temperature for the clinker formation and the thermal stability of the intended clinker phases. Ye'elimite (C₄A₃$) is generally stable up to temperatures of around 1250 °C. At higher temperatures like e.g. above 1300 °C a faster formation of C₄A₃$ is normally observed but followed by a fast decomposition. At 1350 °C this process is even more pronounced. The phase C₅S₂$ shows a similar behaviour but at significant lower temperatures of about 1100 to 1200 °C.

Another important factor for the production of clinker at industrial scale, not comparable to tests conducted in lab-scale, is the granulation behaviour of the clinker. The dry processing in rotary kiln systems is the state-of-the-art production technology for the manufacturing of Portland cement clinkers. The wet and semiwet (feeding of pre-prepared raw meal granules) process has a much higher energy demand for example for the drying of the materials. One key aspect of the dry process is the feeding of the raw material mix as dry powder and granulation of the clinker within the rotary kiln. The granulation is a very important process parameter for various reasons:
(i) avoidance of dust and related problems (health and safety, transport, segregation of bulk material, cooler design, etc.),
(ii) clinker mineral formation and homogeneity and
(iii) processing / handling of the material.
At industrial scale temperatures above 1300 °C, in the range of about 1350 °C, are typically applied to produce acceptable clinker qualities. Acceptable means the formation of clinker granulates and/or the avoidance of minor / inert phases. Staff experienced in the industrial scale clinker production and related process conditions knows that e.g. the temperature control during production is a very hard task (because of various parameters like e.g. dusting etc.) and a measured 1350 °C of the sintering zone could easily vary by ± 50 °C. If the temperature rises to e.g. 1400 °C, very high SO₂ emissions will appear. A reduction of the sintering temperature to temperatures below 1300 °C and preferably around 1250 °C would therefore represent a significant technological breakthrough for a safe and stable production of such clinker types.

From literature it is known that CSA clinkers are very soft / friable and as a result thereof easy to grind. However the real situation is much more complicated. There are very soft fractions of C₄A₃$ and C₅S₂$ as well as very hard C₂S and probably C₄AF. The combined presence of these phases generally leads to a strong overgrinding of the soft minerals and enrichment of the hard ones in the coarse fraction. This is even more problematic since C₄A₃$ is a very reactive phase and especially if overground the cement loses a lot of workability with regard to e.g. open time and set. In the opposite C₂S and C₄AF proved to have a low reactivity and if present in a coarse state are much less reactive or even nearly inert for at least the first 28 days of hydration. Both phases can make up as much as 80 % by weight of the clinker in certain cements. As a result thereof, the presence of coarse e.g. C₂S should be avoided, as a high reactivity is needed to achieve a sufficient cement performance with respect to e.g. strength development.

The formation of melt is one key aspect to at least partly overcome the problem of differences in grindability. If sufficient liquid phase, ideally with a sufficient velocity, is formed, a good granulation and clinker mineral formation is achieved. At lower temperature a phase stabilisation of e.g. C₅S₂$ (by lowering the burning temperature and/or incorporation of foreign ions within the crystal lattice) can also be achieved as all minerals are embedded in the hardened matrix after cooling. Additionally, the efficiency of grinding aids can be enhanced as a more uniform material hardness is achieved and a segregation of bulk material during the grinding process is reduced or even fully avoided. Additionally, the grinding aids can be specifically chosen for example for clinkers low or high in iron and/or ternesite.

The more uniform material hardness results from the uniform embedding of almost all clinker minerals, after cooling, within the hardened matrix of the former liquid phase.

US 2007/0266903 A1 describes the usage of mineralizers, mainly Borax and calcium fluorine, for the production of BCSAF clinker with the following mineralogical composition: 5 to 25 % C₂AₓF₍₁₋ₓ₎, 15 to 35 % C₄A₃$, 40 to 75 % C₂S (with at least 50% as alpha) and 0.01 to 10 % in total of minor phases.

EP 2 105 419 A1 describes an additive compound, based on a water soluble calcium salt and an alkanolamine, as grinding aid as well as an performance enhancing agent for a BCSAF clinker with the following mineralogical composition: 5 to 25 % C₂AₓF₍₁₋ₓ₎, 15 to 35 % C₄A₃$, 40 to 75 % C₂S (with at least 50% as alpha) and 0.01 to 10 % in total of minor phases.

The article "Characterization of mortars from belite-rich clinkers produced from inorganic wastes", Chen et al., Cement & Concrete Composites 33 (2011), 261-266 reports the successful use of an electroplating sludge, containing 16652 ppm Cu, as a major raw material for the production of belite-rich OPC (BRC) at lab-scale.

The article "Reuse of heavy metal-containing sludges in cement production", Shih et al., Cement and Concrete Research 35 (2005), 2110-2115 also reports the successful use of heavy metal-containing sludges, containing 20000 to even 50000 ppm Cu, as a raw material for the production of OPC at lab-scale.

Engelsen describes in "Effect of mineralizers in cement production", SINTEF REPORT No SBF BK A07021 dated 7.6.2007 the use of CuO as a mineralizer for OPC production.

The article "Utilization of municipal solid waste incineration fly ash for sulfoaluminate cement clinker production", Wu et al., Waste Management (2011), doi:10.1016/j.wasman.2011.04.022 reports the use municipal solid waste incineration fly ash, containing among several other trace elements 1122 ppm Cu, for the production of a C₄A₃$-rich sulfoaluminate cement (CSA) clinker. No effect of the copper is described.

Neither an information about the use of copper / copper bearing substances / materials or glass powders / wastes or combinations thereof as mineralizers / fluxes for the production of calcium sulfoaluminate cement clinker nor a beneficial effect on the clinker mineralogy (e.g. preferred formation of cubic iron-rich ye'elimite, stabilisation of ternesite, etc.), melt formation or clinker granulation behaviour and the grindability is presented.

It is an object of the present invention to produce a clinker of calcium sulfoaluminate cement having an improved clinker granulation, (uniform) grindability and clinker composition already at temperatures below 1300 °C, preferably ≤ 1250 °C.

Surprisingly it was found that glass powders, preferably borosilicate and/or alkali-rich glass, also in combination with copper containing materials significantly improve (i) the formation of a liquid phase already at temperatures around 1200 °C, (ii) the formation of a highly reactive cubic C₄A₃$ polymorph as well as the further enhanced incorporation of iron (partial substitution of Al) into the crystal lattice of C₄A₃$ and (iiI) clinker formation, with regard to the reduction / avoidance of unwanted phases (e.g. gehlenite) and the formation of the intended clinker phases.

Accordingly the above object is solved by a method for producing calcium sulfoaluminate clinker according to claim1, the method comprising the following steps:
- providing a raw meal comprising at least sources of CaO, Al₂O₃, SO₃ and if needed of SiO₂ and Fe₂O₃,
- sintering the raw meal in a kiln at a temperature ranging from 1100 to 1350 °C, preferably from 1200 to 1300 °C to provide a clinker, and
- cooling the clinker,
wherein at least one compound containing a glass powder or copper and a glass powder is added prior to or during the sintering.

Preferably the raw meal is made from raw materials providing the following amounts of the components calculated as oxides:
CaO: 35 to 65 % by weight, preferably from 40 to 50 % by weight, most preferred from 45 to 55 % by weight;
Al₂O₃: 7 to 45 % by weight, preferably from 10 to 35 % by weight, most preferred from 15 to 25 % by weight;
SO₃: 5 to 25 % by weight, preferably from 7 to 20 % by weight, most preferred from 8 to 15 % by weight;
SiO₂ 0 to 28 % by weight, preferably from 5 to 25 % by weight, most preferred from 15 to 20 % by weight;
Fe₂O₃ 0 to 30 % by weight, preferably from 3 to 20 % by weight, most preferred from 5 to 15 % by weight,
wherein all components present, including those not listed above, sum up to 100 %.

The cooling of the clinker can take place fast or slowly in the known manner. Typically, fast cooling in air is applied. But it is known and can be beneficial for some clinkers to apply a slow cooling over specific temperature ranges. Thereby, the content of desired phases can be increased and unwanted phase can be converted into desired ones like e.g. C₅S₂$ and/or C₄A₃₋ₓFₓ$.

The compound containing the glass powder or copper and the glass powder acts as flux / mineralizer. It can be added to the raw meal, e.g. to the raw materials whereby raw materials and fluxes /mineralizers are ground together, or after grinding the raw materials to the raw meal at the feed part or in the preheater. By adding into raw material the fluxes / mineralizers can be homogenized directly with the raw meal. Alternatively, the fluxes / mineralizers can be added as powders or silt to sand-like fractions during the processing like e.g. feeding via the kiln inlet, inject through the burners or at any other suitable point right up to the sintering zone.

The term "compounds containing copper" means any material containing copper metal, copper ions or chemically bound copper. The compounds containing copper are preferably selected from the group consisting of Cu metal, CuO, Cu₂O, CuS, Cu₂S, CuSO₄, CuCO₃, CuCO₃·Cu(OH)₂ and Cu(OH)₂ and industrial side products containing copper or copper oxide as well as mixtures of two or more of the mentioned compounds. Industrial (side) products containing copper or copper oxide are e.g. slags and ashes (e.g. waste incineration), copper alloys (e.g. ranging from gilding metal to manganese bronze), embers or ores (residues). These can contain relatively high amounts of Cu or only minor amounts. Preferably, these compounds should contain more than 500 ppm of Cu, especially more than 1000 ppm of Cu, most preferably more than 2000 ppm of Cu.

The amount of compounds containing copper added in the method according to the invention is usually from 0.1 to 5 % by weight, preferably 0.3 to 3 % by weight and most preferred from 0.5 to 2 % by weight calculated as Cu, with respect to the total weight of raw meal.

For Cu metal and compounds with high amount of Cu like CuO, Cu₂O, CuS, Cu₂S, CuSO₄, CuCO₃, CuCO₃·Cu(OH)₂, Cu(OH)₂ and Cu-rich industrial (side) products like e.g. copper alloys the resulting absolute amount of added compound will be from a few tenths to a few percent. Typical ranges for additions of compounds like e.g. slags or ashes, that contain low amounts of Cu, are up to 50 % by weight.

The glass powder is preferably a borosilicate glass or an alkali-rich glass. Window glass, borosilicate glass and other glass wastes can be used. The glasses can be composed of
- SiO₂ 35 to 85 %, typically from 40 to 80 %
- CaO 0 to 30 %, typically from 7 to 20 %
- Na₂O 0 to 20 %, typically from 4 to 15 %
- B₂O₃ 0 to 20 %, typically from 10 to 15 %
- Al₂O₃ 0.1 to 10 %, typically from 0.5 to 5 %
- K₂O 0 to 8 %, typically from 0.1 to 2 %
- MgO 0 to 10 %, typically from 0.1 to 5 %
- Fe₂O₃ 0 to 1 %, typically from 0.01 to 0.2 %
- SO₃ 0 to 1 %, typically from 0.01 to 0.2 %
- others 0 to 5 %, typically from 0.1 to 2 %.

The glass powder is used in an amount ranging from 0.1 to 5 % by weight, preferably from 1 to 4 % by weight and most preferred from 1.5 to 3 % by weight relative to the total weight of the raw meal.

It is advantageous when further one or more minor elements are present in the raw meal, preferably added with the fluxes / mineralizers. These elements are preferably selected from the group consisting of Zn, Ti, Mn, Ba, Sr, V, Cr, Co, Ni, P, fluoride, chloride, and mixtures thereof. Usually they will be added as ZnO, TiO₂, MnO, BaO, SrO, VO, CrO, CoO, NiO, P₂O₅, CaF₂, CaCl₂, FeCl₃ and mixtures thereof. The elements can be also added in the form of e.g. ashes, slags (e.g. copper or phosphor slag), alloys, red mud or other industrial by-products and residues. They can be added in amounts from 0.1 to 5 % by weight, preferably from 0.5 to 3 % by weight, and most preferred from 1 to 2 % by weight, calculated as oxides or calcium salts, respectively, relative to the total weight of the raw meal.

The combined addition of coarse iron sources / iron ore, with an average particle size ranging from 0.01 to 10 mm, preferably from 0.1 to 5 mm and most preferred from 0.5 to 2 mm, with the fluxes / mineralizers leads to an even further improved melt formation and granulation behaviour. The materials can be pre-homogenized or added separately to the raw meal. As a preferred embodiment at least the coarse iron sources / iron ore is added during the (pyro) processing like e.g. feeding directly to the kiln via the kiln inlet.

The invention is beneficial to all kinds of calcium sulfoaluminate cements both belite rich and poor ones as well as with differing amounts of aluminates and ferrites.

The calcium sulfoaluminate clinker usually comprises 10 - 100 % by weight, preferably 20 - 80 % by weight and most preferred 25 to 50 % by weight, C₄A₃₋ₓFₓ$, with x ranging from 0 to 2, preferably from 0.05 to 1 and most preferably from 0.1 to 0.6, 0 - 70 % by weight, preferably 10 to 60 % by weight, most preferred 20 to 50 % by weight C₂S, 0 - 30 % by weight, preferably 1 to 15 % by weight and most preferred 3 to 10 % by weight aluminates, 0 - 30 % by weight, preferably 3 to 25 % by weight and most preferred 5 to 15 % by weight ferrites, 0 - 30 % by weight preferably 3 to 25 % by weight and most preferred 5 to 15 % by weight ternesite, 0 - 30 % by weight calcium sulfate and up to 20 % by weight minor phases, all with respect to the total weight of the clinker. The calcium sulfoaluminate cement typically comprises the same phases, however, in case there is little or no calcium sulfate, this phase is added, such that the content of calcium sulfate in the CSA cement ranges from 1 to 30 % by weight, preferably from 5 to 25 % by weight and most preferred from 8 to 20 % by weight of the CSA cement.

The clinker obtained in accordance with the invention can be processed further similarly to the known clinkers, to form cement or binder mixtures. The cement is obtained by grinding the clinker, with or without addition of further substances. Usually, calcium sulfate is added before or during grinding when its content in the clinker is not as desired. It can also be added after grinding.

The calcium sulfoaluminate cement obtained by grinding the clinker made according to the invention preferably possesses a fineness, according to the particle size distribution determined by laser granulometry, with a d₉₀ ≤ 90 µm, preferably a d₉₀ ≤ 60 µm and most preferred a d₉₀ ≤ 40 µm. The Rosin Rammler Parameter (slope) n can preferably vary from 0.7 to 1.5, especially from 0.8 to 1.3 and most preferably from 0.9 to 1.15.

It is preferred to use grinding aids during grinding of the clinker made according to the method of the invention. The efficiency of grinding aids can be enhanced as a more uniform material hardness is achieved and a possible segregation of bulk material during the grinding process is reduced or even completely avoided. Additionally, the grinding aids can be specifically chosen for example for clinkers being low or high in iron and/or ternesite.

Preferred grinding aids are: Alkanolamines like e.g. monoethanolamine (MEA), diethanolamine (DEA), triethanolamine (TEA) or triisopropanolamine (TIPA), sugars and sugar derivates, glycols like e.g. monoethylene glycols or diethylene glycols, carboxylic acids like e.g. sodium gluconate, oleic acid, sulphonic acids or (ligno)sulphonate. Typical dosages range from 0.01 % to 1.5 % by weight, preferably 0.02 % to 0.5 % by weight, relative to the weight of clinker.

It was found that the clinker produced with the method according to the invention possesses a reduced hardness gradient and this improves grindability. Additionally, a significantly enhanced formation of a liquid phase, improved clinker mineralogy, already at low temperatures of around 1200 as well at 1250 °C was observed, allowing a unique phase composition/combination. The clinker produced according to the invention also possesses an improved granulation already at temperatures below 1300 °C because of the enhanced formation of a liquid phase.

Thus, the invention also relates to the clinker obtainable according to the method described and to the cement and binder produced from this calcium sulfoaluminate clinker.

As known for prior art CSA cements and binders, further possible substances are e.g. admixtures which are added to the cement / binder but also to concrete and mortar. Typical useful admixtures / accelerators are: calcium nitrate and/or calcium nitrite, CaO, Ca(OH)₂, CaCl₂, Al₂(SO₄)₃, KOH, K₂SO₄, K₂Ca₂(SO₄)₃, K₂CO₃, NaOH, Na₂SO₄, Na₂CO₃, NaNO₃, LiOH, LiCl, Li₂CO₃, K₂Mg₂(SO₄)₃, MgCl₂, MgSO₄.

The binder can further contain supplementary cementitious materials in amounts ranging from 10 to 90 % by weight. The supplementary cementitious materials are selected from latent hydraulic materials and/or natural or artificial pozzolanic materials, preferably but not exclusively from latent hydraulic slags like e.g. ground granulated blast furnace slag, type-C and/or type-F fly ashes, calcined clays or shales, trass, brick-dust, artificial glasses, silica fume, and burned organic matter residues rich in silica such as rice husk ash or mixtures thereof.

The cement and binder according to the invention are useful as binder for concrete, mortar, etc. and also as binder in construction chemical mixtures such as plaster, floor screed, tile adhesive and so on. It can be used in the same way as known CSA cement, whereby it provides improved phase composition and resulting reactivity and/or reduces the environmental impact due to an improved energy utilization.

The invention will be illustrated further with reference to the examples that follow, without restricting the scope to the specific embodiments described. If not otherwise specified any amount in % or parts is by weight and in the case of doubt referring to the total weight of the composition/mixture concerned.

The invention further includes all combinations of described and especially of preferred features that do not exclude each other. A characterization such as "approximately", "around" and similar expressions in relation to a numerical value means that up to 10 % higher and lower values are included, preferably up to 5 % higher and lower values, and in any case at least up to 1 % higher and lower values, the exact value being the most preferred value or limit.

### Example 1

A raw meal was prepared from 38.6 % limestone, 33.6 % slag, 13.3 % anhydrite, 9.9 % Al(OH)₃ (Merck, p.a.) and 4.6 % iron ore. The composition of the raw materials is listed in table 2, including the loss on ignition (loi) at 1050 °C. The raw meal was divided into 5 samples A to E, of which samples A to D were made for comparison and sample E is according to the invention. Sample A comprised no flux/mineralizer, B comprised 0.5 wt.-% CaF₂ (0.5 g / 100 g raw mix), C comprised 1.0 wt.-% Borax (1 g / 100 g), D comprised 0.5 wt.-% CuO (0.5 g / 100 g) and E comprised 2.0 wt.-% a typical alkali-lime glass powder (GP) (2 g / 100 g).

**Table 2:**

| | | **Limestone** | **slag** | **anhydrite** | **iron ore** |
|---|---|---|---|---|---|
| loi 1050 °C | | 43,12 | 1,30 | 4,65 | 1,97 |
| SiO₂ | | 1,73 | 34,97 | 2,95 | 2,58 |
| Al₂O₃ | | 0,28 | 11,42 | 0,78 | 0,69 |
| TiO₂ | | 0,01 | 1,11 | 0,03 | 0,03 |
| MnO | | 0,01 | 0,27 | 0,01 | 0,04 |
| Fe₂O₃ | % | 0,12 | 0,46 | 0,31 | 89,72 |
| CaO | | 54,25 | 41,64 | 37,60 | 0,48 |
| MgO | | 0,3 | 5,72 | 1,95 | 0,34 |
| K₂O | | 0,05 | 0,48 | 0,20 | 0,06 |
| Na₂O | | 0 | 0,08 | 0,03 | 0,00 |
| SO₃ | | 0,02 | 3,04 | 50,50 | 0,36 |
| P₂O₅ | | 0,03 | 0,03 | 0,00 | 0,02 |

The raw meals were heated up during approximately 30 min from 20 °C to the intended temperature and sintered for 1 hour followed by a rapid cooling at air. The sample D was only sintered at 1200 and 1250 °C as it was the only material being already at 1200 °C strongly and at 1250 °C almost fully molten. The mineralogical phase composition of the comparison clinkers A to D and the clinker according to the invention E are presented in Table 3, all amounts in % by weight relative to the total clinker weight.

**Table 3**

| Sample | A | B | C | D | E |
|---|---|---|---|---|---|
| added flux | none | CaF2 | Borax | CuO | GP |
| **sint. temp.** | **1250 °C** | **1250 °C** | **1250 °C** | **1200 °C** | **1250 °C** |
| C₄A₃$-o | 12.8 % | 13.0 | 11.8 | 11.4 | 11.0 |
| C₄A₃$-c | 7.2 % | 6.1 | 10.2 | 8.5 | 9.8 |
| Σ C₄A₃$ | 20.0 % | 19.1 % | 22.0 % | 19.9 % | 20.8 % |
| α-C₂S | 1.3 % | 1.4 % | 50.6 % | 1.9 % | 4.6 % |
| β-C₂S | 52.7 % | 46.3 % | 3.2 % | 41.6 % | 48.3 % |
| γ-C₂S | -- | -- | -- | -- | -- |
| C₄AF | 10.4 % | 14.2 % | 7.1 % | 11.2 % | 8.1 % |
| C₂F | 5.5 % | 3.1 % | 5.4 % | 3.2 % | 5.1 % |
| others | -- | 7.3 % Ellestadite | -- | 7.7 % C₅S₂$ | -- |
| Minors | 10.1 % | 8.6 % | 11.7 | 14.5 % | 13.1 % |
| | | | | | |

| **sint. temp.** | **1300 °C** | **1300 °C** | **1300°C** | **1250°C** | **1300°C** |
|---|---|---|---|---|---|
| C₄A₃$-o | 11.9 % | 13.3 | 12.0 | 12.0 | 11.2 |
| C₄A₃$-c | 8.7 % | 6.3 | 10.0 | 8.6 | 10.7 |
| Σ C₄A₃$ | 20.6 % | 22.0% | 22.0 | 20.6 % | 21.9 % |
| α-C₂S | 2.1 % | 38.5 % | 38.4 | 3.0 % | 5.0 % |
| β-C₂S | 53.6 % | 11.1 % | 11.1 | 47.2 % | 49.7 % |
| γ-C₂S | -- | 1.5 % | 1.5 | -- | -- |
| C₄AF | 14.0 % | 11.7 % | 11.7 | 14.1 % | 9.5 % |
| C₂F | 2.5 % | 3.6 % | 3.6 | 2.8 % | 3.2 % |
| others | -- | -- | -- | -- | -- |
| Minors | 7.2 % | 11.6 % | 11.7 | 12.3 % | 10.7 % |

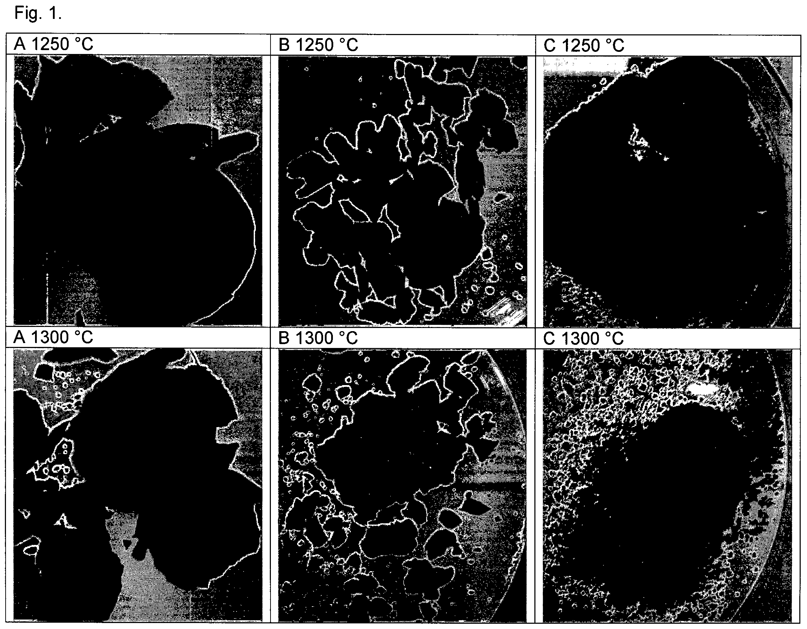

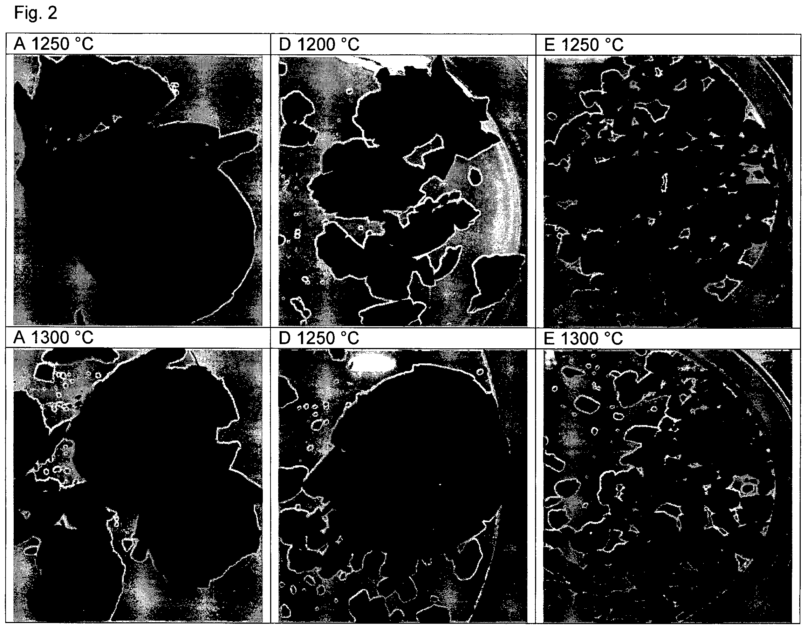

Photos of the clinker samples A to E obtained are shown in Figures 1 and 2. The comparison sample A without added fluxes / mineralizers produced at 1250 °C was soft and friable, the sample A produced at 1300 °C is solid and partly molten. The comparative sample made with CaF₂ produced at 1250 °C was solid and partly molten, the sample made with CaF₂ produced at 1300 °C was hard and fully molten. The comparative samples made with Borax produced at 1250 °C as well as at 1300 °C were decomposing already during cooling. It was found that the sample made with CuO produced at 1200 °C was very hard and partly molten, the sample made with CuO produced at only 1250 °C is very hard and almost fully molten. Likewise, the sample made with an alkali-lime glass powder produced at 1250 °C was hard, the sample made at 1300 °C was hard and partly molten.

From table 3 and figures 1 and 2 it can be seen that CuO allows for a significant reduction of the sintering temperature which enables the stabilisation of a further desirable reactive clinker phase, namely ternesite. A significant melt formation was already achieved at 1200 °C and even more pronounced at 1250 °C. The use of 2 % by weight of a typical alkali-lime window glass in powder form enhances the formation of C₄A₃$ and of α-C₂S measurably. Additionally, it can be seen that the addition of the glass powder strongly and of CuO slightly, comparable to the system with borax, enhances the formation / stabilisation of a cubic iron-rich C₄A₃₋ₓFₓ$ and also results in a slightly higher total ye'elimite content accompanied by a decreasing ferrite content. A slight enhancement of the clinker hardness was observed for sample E compared to the blank sample. The addition of CaF₂ leads to the stabilisation of an unwanted inert phase namely Ellestadite up to 1250 °C. The addition of Borax results at all temperatures to an unwanted decomposition of the formed clinker granule but also to a pronounced stabilisation of α-C₂S.

### Example 2

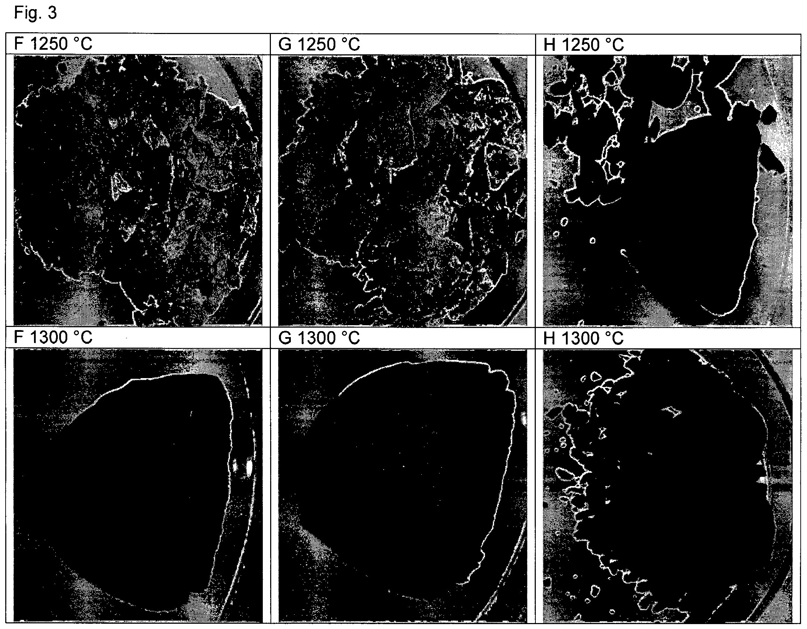

A raw meal was prepared from 36.3 % limestone, 18.6 % anhydrite, 41.5 % Al(OH)₃ (Merck, p.a.) and 3.6 % iron ore, composition as in table 2. The raw meal was divided into 3 samples (F to H), wherein samples F and H were for comparison and sample G was according to the invention. Sample F comprised 0.5 % CaF₂ (0.5 g / 100 g raw mix), G comprised 2.0 % of a typical alkali-lime glass powder (GP) (2 g / 100 g) and H comprised 0.5 % CuO (0.5 g / 100 g). The raw meals were heated up during approximately 30 min from 20 °C to the intended temperature and sintered for 1 hour followed by a rapid cooling at air. The mineralogical phase composition of the comparison clinkers F and H and the clinker G according to the invention are presented in table 4. Photos of the clinker samples obtained are shown in Fig. 3. The samples F made with CaF₂ produced at 1250 °C was soft and 1300 °C hard and partly molten. The sample G made with an alkali-lime glass powder produced at 1250 °C was hard, the sample made at 1300 °C is hard and partly molten. The sample H made with CuO produced at 1250 °C as well at 1300 °C was very hard and partly molten. Like CuO glass powder proofs to have also an beneficial effect on the clinkering of almost silicate free clinkers.

**Table 4**

| sample | F | G | H |
|---|---|---|---|
| added flux | CaF2 | Glass powder | CuO |
| **sint. temp.** | **1250 °C** | **1250 °C** | **1250 °C** |
| C₄A₃$-o | 56.5 % | 53.2 % | 56.0% |
| C₄A₃$-c | 15.7 % | 23.2 % | 17.7 % |
| Σ C₄A₃$ | 72.2 % | 76.4 % | 73.7 % |
| α-C₂S | -- | -- | -- |
| β-C₂S | 1.7 % | 6.8 % | -- |
| C₄AF | 12.2 % | 8.4 % | 14.8 % |
| C₂F | 1.7 % | 0.9 % | -- |
| Minors | 12.2 % | 7.5 % | 11.5 % |
| | | | |

| sint. **temp.** | **1300 °C** | **1300 °C** | **1300 °C** |
|---|---|---|---|
| C₄A₃$-o | 58.8 % | 46.6 % | 56.6 % |
| C₄A₃$-c | 15.8 % | 28.7 % | 19.6 % |
| Σ C₄A₃$ | 74.6 % | 75.3 % | 76.2 % |
| α-C₂S | -- | -- | -- |
| β-C₂S | -- | 7.6 % | -- |
| C₄AF | 12.7 % | 9.1 % | 14.8 % |
| C₂F | 2.1 % | -- | -- |
| Minors | 10.6 % | 8.1 % | 9.0 % |

From Table 4 it can be seen that the mineralogical composition was improved significantly by adding the fluxes /mineralizers according to the present invention. Similar to example 1, the formation / stabilisation of a cubic iron-rich C₄A₃₋ₓFₓ$ and a slightly higher total ye'elimite content was observed.

### Example 3

A raw meal was prepared from 38.6 % limestone, 33.6 % slag, 13.3 % anhydrite, 9.9 % Al(OH)₃ (Merck, p.a.) and 4.6 % iron ore. The composition of the raw materials is listed in table 2, including the loss on ignition (loi) at 1050 °C. The raw meal was divided into 4 samples I to L. Sample I comprised each 0.5 wt.-% CuO and CaF₂ (0.5 g / 100 g raw mix), J comprised 2.0 wt.-% glass powder (2 g / 100 g) and 0.5 wt.-% CaF₂, comparison K comprised 0.5 wt.-% CuO and 0.5 wt.-% TiO₂ (each 0.5 g / 100 g) and comparison L comprised 0.5 wt.-% CuO and 0.5 wt.-% ZnO (each 0.5 g / 100 g). The mineralogical phase compositions of the clinkers are presented in table 5.

**Table 5**

| sample | I | J | K | L |
|---|---|---|---|---|
| added flux | CuO + CaF₂ | Glass powder + CaF₂ | CuO + TiO₂ | CuO + ZnO |
| **sint. temp.** | **1200 °C** | **1250 °C** | **1250 °C** | **1250 °C** |
| C₄A₃$-o | 11.2 | 10.1 | 11.1 | 12.1 |
| C₄A₃$-c | 8.7 | 8.5 | 9.0 | 7.6 |
| Σ C₄A₃$ | 19.9 | 18.6 | 20.1 | 19.7 |
| α-C₂S | 1.6 | 3.0 | -- | -- |
| β-C₂S | 39.4 | 47.0 | 55.1 | 56.2 |
| C₄AF | 11.4 | 14.9 | 13.0 | 12.9 |
| C₂F | 3.8 | -- | 1.3 | 2.9 |
| Others | 7.4 Ellestadite 2.7 C₅S₂$ | 5.4 Ellestadite 1.5 C₅S₂$, 1.1 C₁₂A₇ | | |
| Minors | 13.8 | 8.5 | 10.5 | 8.3 |
| | | | | |

| **sint. temp.** | **1250 °C** | **1300 °C** | **1300 °C** | **1300 °C** |
|---|---|---|---|---|
| C₄A₃$-o | 12.5 | 10.3 | 10.4 | 10.5 |
| C₄A₃$-c | 7.9 | 9.4 | 8.8 | 7.6 |
| Σ C₄A₃$ | 20.4 | 19.7 | 19.2 | 18.1 |
| α-C₂S | 2.3 | 1.3 | 1.5 | 2.1 |
| β-C₂S | 42.4 | 49.1 | 52.6 | 51.1 |
| C₄AF | 13.2 | 16.4 | 13.4 | 15.5 |
| C₂F | 3.6 | -- | 4.0 | 3.3 |
| Others | 7.0 Ellestadite 1.1 C₅S₂$ | 4.3 Ellestadite 0.6 C₁₂A₇ | | |
| Minors | 10.0 | 8.6 | 9.3 | 9.9 |

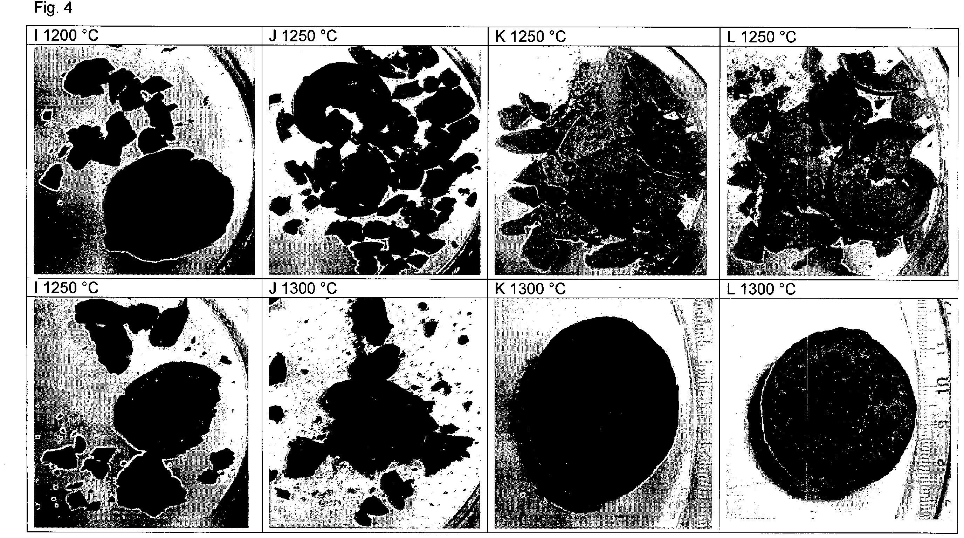

Photos of the clinker samples I to L obtained are shown in figure 4. All samples show already at 1250 °C (J to L) and even at 1200 °C (I) a strong formation of a liquid phase. All samples are (very) hard and partly molten. At 1300 °C (J to L) and 1250 °C (I) all samples are very hard and fully molten.

From table 5 it can be seen that the mineralogical compositions are comparable to the results of example 1. A slightly improved formation of C₄AF at 1250 °C and strongly enhanced at 1300 °C is observed compared to the results obtained in example 1. This observation correlates well with the increased formation of a liquid phase shown in figure 4.

These results prove the enhanced melt formation according to the present invention and enable the granulation of the clinker.

## Claims

1. A method for producing calcium sulfoaluminate clinker comprising 10 - 100 % by weight C₄A₃₋ₓFₓ$, with x ranging from 0 to 2, 0 - 70 % by weight C₂S, 0 - 30 % by weight aluminates, 0 - 30 % by weight ferrites, 0 - 30 % by weight ternesite, 0 - 30 % by weight calcium sulfate and up to 20 % by weight minor phases, all with respect to the total weight of the clinker, comprising the following steps
- providing a raw meal comprising at least sources of CaO, Al₂O₃, SO₃
- sintering the raw meal in a kiln at a temperature ranging from 1100 to 1350 °C to provide a clinker
- cooling the clinker
wherein a flux / mineralizer comprising at least one compound containing a glass powder or copper and a glass powder is added to the raw meal prior to or during sintering.

2. The method according to claim 1, wherein the raw meal comprises the following amounts of the components:
CaO: 35 to 65 % by weight, preferably 40 to 50 % by weight, most preferred from 45 to 55 % by weight;
Al₂O₃: 7 to 45 % by weight, preferably 10 to 35 % by weight, most preferred from 15 to 25 % by weight;
SO₃: 5 to 25 % by weight, preferably 7 to 20 % by weight, most preferred from 8 to 15 % by weight;
SiO₂: 0 to 28 % by weight, preferably 5 to 25 % by weight, most preferred from 15 to 20 % by weight; and
Fe₂O₃: 0 to 30 % by weight, preferably 3 to 20 % by weight, most preferred from 5 to 15 % by weight.

3. The method according to claim 1 or 2, wherein the sintering temperature ranges from 1200 to 1300 °C.

4. The method according to at least one of claims 1 to 3, wherein the flux(es) / mineralizer(s) is(are) added to raw materials used to provide the raw meal, or is(are) added as powder or silt to the raw meal before feeding and/or during feeding at the kiln inlet or is(are) added to the kiln, preferably through the burner, before or at the sintering zone.

5. The method according to at least one of claims 1 to 4, wherein at least one compound containing copper, which is selected from the group consisting of Cu, CuO, Cu₂O, CuS, Cu₂S, CuSO₄, CuCO₃, CuCO₃·Cu(OH)₂ and Cu(OH)₂ and industrial side products containing copper as well as mixtures of two or more of them, is comprised in the flux/mineralizer.

6. The method according to claim 5, wherein the industrial side products containing copper or copper oxide are selected from ashes, slags, embers, ores (residues), copper alloys or mixtures thereof.

7. The method according to claim 5 or 6, wherein the compound containing copper is used in an amount ranging from 0.1 to 5 % by weight, preferably 0.3 to 3 % by weight and most preferred from 0.5 to 2 % by weight calculated as Cu, with respect to the total weight of raw meal.

8. The method according to at least one of claims 1 to 7, wherein the glass powder is selected from window glass powder, borosilicate glass powder, powdered waste glass or mixtures thereof.

9. The method according to claim 8, wherein the glass powder is used in an amount ranging from 0.1 to 5 % by weight, preferably from 1 to 4 % by weight and most preferred from 1.5 to 3 % by weight relative to the total weight of the raw meal.

10. The method according to at least one of claims 1 to 9, wherein additionally one or more minor elements selected from the group consisting of Zn, Ti, Mn, Ba, Sr, V, Cr, Co, Ni, P, fluoride, chloride and mixtures thereof is used as flux /mineralizer.

11. The method according to claim 10, wherein the minor element is used in an amount ranging from 0.1 % to 5 % by weight, preferably from 0.5 to 3 % by weight, and most preferred from 1 to 2 % by weight, relative to the total weight of the raw meal and calculated as oxide.

12. The method according to at least one of claims 1 to 11, wherein iron or iron ore with an average particle size ranging from 0.01 to 10 mm, preferably from 0.1 to 5 mm and most preferred from 0.5 to 2 mm, is added, wherein the iron source is pre-homogenized or added separately to the raw meal or during the (pyro)processing.

13. Clinker obtainable by the method according to any one of claims 1 to 12.

14. Method of manufacturing a calcium sulfoaluminate cement, wherein a clinker obtainable by the method according to any one of claims 1 to 12 is subjected to grinding.

15. Method according to claim 14, wherein a grinding aid, preferably selected from alkanolamines e.g. monoethanolamine (MEA), diethanolamine (DEA), triethanolamine (TEA) or triisopropanolamine (TIPA), sugars and sugar derivate, glycols e.g. monoethylene glycols or diethylene glycols, carboxylic acids like e.g. sodium gluconate, oleic acid, sulphonic acids or (ligno)sulphonate and mixtures thereof, especially DEA or TIPA or mixtures thereof, is used.

16. Cement obtainable by the method according to claim 14 or 15.

17. Binder comprising a cement according to claim 16 and at least one supplementary cementitious material, preferably in an amount ranging from 10 to 90 % by weight of the binder.

18. Binder according to claim 17, wherein the supplementary cementitious material is selected from latent hydraulic materials and/or natural or artificial pozzolanic materials, preferably from latent hydraulic slags, especially ground granulated blast furnace slag, type-C and/or type-F fly ashes, calcined clays or shales, trass, brick-dust, artificial glasses, silica fume, and burned organic matter residues rich in silica such, especially rice husk ash, or mixtures thereof.

## Patentansprüche

1. Verfahren zur Herstellung von Calciumsulfoaluminatklinker umfassend 10 - 100 Gew.-% C₄A₃₋ₓFₓ$, mit x im Bereich von 0 to 2, 0 - 70 Gew.-% C₂S, 0 - 30 Gew.-% Aluminate, 0 - 30 Gew.-% Ferrite, 0 - 30 Gew-% Ternesit, 0 - 30 Gew.-% Calciumsulfat und bis zu 20 Gew.-% Nebenphasen, jeweils bezogen auf das Gesamtgewicht des Klinkers, umfassend die folgenden Schritte:
- Bereitstellung eines Rohmehls, das zumindest Quellen für CaO, Al₂O₃, SO₃ enthält
- Sintern des Rohmehls in einem Ofen bei einer Temperatur von 1100 bis 1350 °C, um einen Klinker zu erhalten,
- Kühlen des Klinkers,
wobei dem Rohmehl vor oder während des Sinterns ein Flussmittel/Mineralisator, das/der mindestens eine Verbindung enthaltend ein Glaspulver oder Kupfer und ein Glaspulver enthält, zugesetzt wird.

2. Verfahren gemäß Anspruch 1, wobei das Rohmehl die folgenden Mengen der Komponenten umfasst:
CaO: 35 bis 65 Gew.-%, vorzugsweise 40 bis 50 Gew.-%, am meisten bevorzugt von 45 bis 55 Gew.-%;
Al₂O₃: 7 bis 45 Gew.-%, vorzugsweise 10 bis 35 Gew.-%, am meisten bevorzugt von 15 bis 25 Gew .-%;
SO₃: 5 bis 25 Gew.-%, vorzugsweise 7 bis 20 Gew.-%, am meisten bevorzugt 8 bis 15 Gew.-%;
SiO₂: 0 bis 28 Gew.-%, vorzugsweise 5 bis 25 Gew.-%, am meisten bevorzugt von 15 bis 20 Gew.-%; und
Fe₂O₃: 0 bis 30 Gew.-%, vorzugsweise 3 bis 20 Gew.-%, am meisten bevorzugt von 5 bis 15 Gew.-%.

3. Verfahren gemäß Anspruch 1 oder 2, wobei die Sintertemperatur im Bereich von 1200 bis 1300 °C liegt.

4. Verfahren gemäß mindestens einem der Ansprüche 1 bis 3, wobei das (die) Flussmittel/der (die) Mineralisator(en) den Rohstoffen zugesetzt wird (werden), die zur Bereitstellung des Rohmehls verwendet werden, oder als Pulver oder Schlamm dem Rohmehl vor der Zufuhr und/oder während der Zufuhr am Ofeneinlass zugesetzt wird (werden) oder in den Ofen zugefügt wird (werden), vorzugsweise durch den Brenner, vor oder in der Sinterzone.

5. Verfahren gemäß mindestens einem der Ansprüche 1 bis 4, wobei mindestens eine Kupfer enthaltende Verbindung in dem Flussmittel/Mineralisator enthalten ist, die aus der Gruppe bestehend aus Cu, CuO, Cu₂O, CuS, Cu₂S, CuSO₄, CuCO₃, CuCO₃ • Cu(OH)₂ und Cu(OH)₂ und industriellen Nebenprodukten, die Kupfer enthalten, sowie Mischungen von zwei oder mehr davon ausgewählt ist.

6. Verfahren gemäß Anspruch 5, wobei die Kupfer oder Kupferoxid enthaltenden industriellen Nebenprodukte aus Aschen, Schlacken, Glutaschen, Erzen (Rückstände), Kupferlegierungen oder Mischungen davon ausgewählt sind.

7. Verfahren gemäß Anspruch 5 oder 6, wobei die Kupfer enthaltende Verbindung in einer Menge im Bereich von 0,1 bis 5 Gew.-%, vorzugsweise 0,3 bis 3 Gew.-% und am meisten bevorzugt 0,5 bis 2 Gew.-%, berechnet als Cu, verwendet wird, bezogen auf das Gesamtgewicht des Rohmehls.

8. Verfahren gemäß mindestens einem der Ansprüche 1 bis 7, wobei das Glaspulver ausgewählt ist unter Fensterglas, Borsilikatglaspulver, pulverförmigem Glasabfall oder Mischungen davon.

9. Verfahren gemäß Anspruch 8, wobei das Glaspulver in einer Menge im Bereich von 0,1 bis 5 Gew.-%, vorzugsweise von 1 bis 4 Gew.-% und am meisten bevorzugt von 1,5 bis 3 Gew.-%, bezogen auf das Gesamtgewicht des Rohmehls, verwendet wird.

10. Verfahren gemäß mindestens einem der Ansprüche 1 bis 9, wobei zusätzlich eines oder mehrere Nebenelemente ausgewählt aus der Gruppe bestehend aus Zn, Ti, Mn, Ba, Sr, V, Cr, Co, Ni, P, Fluorid, Chlorid und Mischungen davon als Flussmittel/Mineralisator verwendet wird.

11. Verfahren gemäß Anspruch 10, wobei das Nebenelement in einem Mengenbereich von 0,1 bis 5 Gew.-%, vorzugsweise von 0,5 bis 3 Gew.-% und am meisten bevorzugt von 1 bis 2 Gew.-%, bezogen auf das Gesamtgewicht des Rohmehls und als Oxid berechnet, verwendet wird.

12. Verfahren gemäß mindestens einem der Ansprüche 1 bis 11, wobei Eisen oder Eisenerz mit einer mittleren Teilchengröße im Bereich von 0,01 bis 10 mm, vorzugsweise von 0,1 bis 5 mm und am meisten bevorzugt von 0,5 bis 2 mm zugegeben wird, wobei die Eisen-Quelle vorhomogenisiert wird oder separat dem Rohmehl oder während der (Pyro)-Verarbeitung zugegeben wird.

13. Klinker erhältlich durch das Verfahren gemäß einem der Ansprüche 1 bis 12.

14. Verfahren zur Herstellung eines Calciumsulfoaluminat-Zements, wobei ein Klinker, der durch das Verfahren gemäß einem der Ansprüche 1 bis 12 erhältlich ist, einer Mahlung ausgesetzt wird.

15. Verfahren gemäß Anspruch 14, wobei ein Mahlhilfsmittel verwendet wird, vorzugsweise ausgewählt aus Alkanolaminen, z.B. Monoethanolamin (MEA), Diethanolamin (DEA), Triethanolamin (TEA) oder Triisopropanolamin (TIPA), Zucker und Zuckerderivat, Glykole, z.B. Monoethylenglykole oder Diethylenglykole, Carbonsäuren wie z.B. Natriumgluconat, Ölsäure, Sulfonsäuren oder (Ligno) Sulfonat und Mischungen davon, insbesondere DEA oder TIPA oder Mischungen davon.

16. Zement, erhältlich durch das Verfahren gemäß Anspruch 14 oder 15.

17. Bindemittel umfassend einen Zement gemäß Anspruch 16 und zumindest ein Klinkerersatzmaterial, vorzugsweise in einer Menge im Bereich von 10 bis 90 Gew.-% des Bindemittels.

18. Bindemittel gemäß Anspruch 17, wobei das Klinkerersatzmaterial ausgewählt ist unter aus latent hydraulischen Materialien und/oder natürlichen oder künstlichen Puzzolanen, vorzugsweise unter latent hydraulischen Schlacken, insbesondere Hüttensand, Typ-C und/oder Typ-F-Flugaschen, kalzinierten Tonen oder Schiefern, Trass, Ziegelstaub, künstlichen Gläsern, Silikastaub und Verbrennungsrückständen organischer Stoffe, die reich an Kieselsäure sind, insbesondere Reisschalenasche, oder Mischungen davon.

## Revendications

1. Procédé de production de clinker de sulfoaluminate de calcium comprenant 10 - 100 % en poids C₄A₃₋ₓFₓ$, avec x s'étendant de 0 à 2, 0 - 70 % en poids C₂S, 0 - 30 % en poids d'aluminates, 0 - 30 % en poids de ferrites, 0 - 30 % en poids de ternésite, 0 - 30 % en poids de sulfate de calcium et jusqu'à 20 % en poids de phases mineures, toutes par rapport au poids total du clinker, comprenant les étapes suivantes
- fourniture d'un cru comprenant au moins des sources de CaO, Al₂O₃, SO₃
- frittage du cru dans un four à une température s'étendant de 1100 à 1350 °C pour fournir un clinker,
- refroidissement du clinker,
dans lequel un agent fluidifiant/minéralisant comprend au moins un composé contenant une poudre de verre ou du cuivre et une poudre de verre est ajoutée au cru avant ou pendant le frittage.

2. Procédé selon la revendication 1, dans lequel le cru comprend les quantités suivantes des composants :
CaO: de 35 à 65 % en poids, préférablement de 40 à 50 % en poids, de manière la plus préférée de 45 à 55 % en poids ;
Al₂O₃: de 7 à 45 % en poids, préférablement de 10 à 35 % en poids, de manière la plus préférée de 15 à 25 % en poids ;
SO₃: de 5 à 25 % en poids, préférablement de 7 à 20 % en poids, de manière la plus préférée de 8 à 15 % en poids ;
SiO₂: de 0 à 28 % en poids, préférablement de 5 à 25 % en poids, de manière la plus préférée de 15 à 20 % en poids ; et
Fe₂O₃: de 0 à 30 % en poids, préférablement de 3 à 20 % en poids, de manière la plus préférée de 5 à 15 % en poids.

3. Procédé selon la revendication 1 ou 2, dans lequel la température de frittage s'étend de 1200 à 1300 °C.

4. Procédé selon au moins l'une des revendications 1 à 3, dans lequel l'(les) agent(s) fluidifiant(s)/minéralisant(s) est(sont) ajouté(s) aux matières premières utilisées pour fournir le cru, ou est(sont) ajouté(s) sous la forme d'une poudre ou de limon au cru avant l'alimentation et/ou durant l'alimentation au niveau de l'orifice d'entrée du four ou est(sont) ajouté(s) au four, préférablement à travers le brûleur, avant ou au niveau de la zone de frittage.

5. Procédé selon au moins l'une des revendications 1 à 4, dans lequel au moins un composé contenant du cuivre, qui est sélectionné dans le groupe constitué de Cu, CuO, Cu₂O, CuS, Cu₂S, CuSO₄, CuCO₃, CuCO₃•Cu(OH)₂ et Cu(OH)₂ et des sous-produits industriels contenant du cuivre ainsi que des mélanges de deux ou plusieurs d'entre eux, est présent dans l'agent fluidifiant/le minéralisant.

6. Procédé selon la revendication 5, dans lequel les sous-produits industriels contenant du cuivre ou de l'oxyde de cuivre sont sélectionnés parmi les cendres, les laitiers, les braises, les minerais (résidus), les alliages de cuivre ou leurs mélanges.

7. Procédé selon la revendication 5 ou 6, dans lequel le composé contenant le cuivre est utilisé en une quantité s'étendant de 0,1 à 5 % en poids, préférablement de 0,3 à 3 % en poids et de manière la plus préférée de 0,5 à 2 % en poids calculée en Cu, par rapport au poids total du cru.

8. Procédé selon au moins l'une des revendications 1 à 7, dans lequel la poudre de verre est sélectionnée parmi la poudre de vitre, la poudre de verre type borosilicate, le verre de rebut en poudre ou leurs mélanges.

9. Procédé selon la revendication 8, dans lequel la poudre de verre est utilisée en une quantité s'étendant de 0,1 à 5 % en poids, préférablement de 1 à 4 % en poids et de manière la plus préférée de 1,5 à 3 % en poids par rapport au poids total du cru.

10. Procédé selon au moins l'une des revendications 1 à 9, dans lequel de manière supplémentaire un ou plusieurs éléments mineurs sélectionnés dans le groupe constitué de Zn, Ti, Mn, Ba, Sr, V, Cr, Co, Ni, P, du fluorure, du chlorure et de leurs mélanges sont utilisés comme agents fluidifiants/minéralisants.

11. Procédé selon la revendication 10, dans lequel l'élément mineur est utilisé en une quantité s'étendant de 0,1 % à 5 % en poids, préférablement de 0,5 à 3 % en poids, et de manière la plus préférée de 1 à 2 % en poids, par rapport au poids total du cru et calculée en oxyde.

12. Procédé selon au moins l'une des revendications 1 à 11, dans lequel le fer ou le minerai de fer avec une taille moyenne de particule s'étendant de 0,01 à 10 mm, préférablement de 0,1 à 5 mm et de manière la plus préférée de 0,5 à 2 mm, est ajouté, et la source de fer étant pré-homogénéisée ou ajoutée séparément au cru ou durant le (pyro)traitement.

13. Clinker pouvant être obtenu grâce au procédé selon l'une quelconque des revendications 1 à 12.

14. Procédé de fabrication d'un ciment de sulfoaluminate de calcium, dans lequel un clinker pouvant être obtenu par le procédé selon l'une quelconque des revendications 1 à 12 est soumis au broyage.

15. Procédé selon la revendication 14, dans lequel un auxiliaire de broyage, préférablement sélectionné parmi les alcanolamines par exemple la monoéthanolamine (MEA), la diéthanolamine (DEA), la triéthanolamine (TEA) ou la triisopropanolamine (TIPA), les sucres et un dérivé de sucre, les glycols par exemple les monoéthylène glycols ou les diéthylène glycols, les acides carboxyliques tels que par exemple le gluconate de sodium, l'acide oléique, les acides sulfoniques ou le (lingo)sulfonate et leurs mélanges, spécialement le DEA ou le TIPA ou leurs mélanges, est utilisé.

16. Ciment pouvant être obtenu grâce au procédé selon la revendication 14 ou 15.

17. Liant comprenant un ciment selon la revendication 16 et au moins un matériau cimentaire supplémentaire, préférablement en une quantité s'étendant de 10 à 90 % en poids du liant.

18. Liant selon la revendication 17, dans lequel le matériau cimentaire supplémentaire est sélectionné parmi les matériaux hydrauliques latents et/ou les matériaux pouzzolaniques d'origine naturelle ou artificiels, provenant préférablement de laitiers hydrauliques latents, spécialement de laitier granulé broyé de haut fourneau, de cendres volantes de type C et/ou de type F, d'argiles calcinées ou de schistes, des trass, de la poudre de brique, des verres artificiels, de la silice sublimée, et des résidus de matière organique brûlée riches en silice telle que, spécialement la cendre de balles de riz, ou leurs mélanges.
